# EUROPEAN PATENT SPECIFICATION

(11) **EP 1 856 605 B1**
(45) Date of publication and mention of the grant of the patent: **30.12.2015**
(21) Application number: 06734076.0
(22) Date of filing: 31.01.2006
(51) Int. Cl.: H04L 29/08, H04L 29/06

(54) **SYSTEMS AND METHODS FOR REMOTE CROSS-PLATFORM INSTRUCTIONS**
SYSTEME UND VERFAHREN FÜR ENTFERNTE, PLATTFORMÜBERGREIFENDE BEFEHLE
SYSTEMES ET PROCEDES PERMETTANT DE FOURNIR DES INSTRUCTIONS A DISTANCE D'UNE PLATE-FORME A UNE AUTRE PLATE-FORME

(30) Priority: 10.03.2005 US 78935
(43) Date of publication of application: 21.11.2007
(73) Proprietor: Siemens Aktiengesellschaft, 80333 München (DE)
(72) Inventor: ANSARI, Mohammed, San Diego, California 92127 (US); CHADHA, Lovleen, 121008 Faridabad, Haryana (IN)
(86) International application number: PCT/US2006/003281
(87) International publication number: WO 2006/098815

(56) References cited:
- US-A1- 2003 061 602

## Description

### TECHNICAL FIELD

The present disclosure relates generally to systems and methods for providing remote cross-platform instructions.

### BACKGROUND

Electronic and mobile electronic devices such as cellular telephones are often utilized by consumers to perform various tasks. The usage of such devices and particularly the configuration of such devices often require a great deal of input from the consumer. Device usage and configuration is made more difficult by the fact that different device manufactures and/or vendors utilize different User Interface (UI) programs to control their respective devices. Instructions that cause one device to achieve a certain result may not, for example, be operable to cause the same result to be achieved on another device. Similarly, instructions must typically be entered directly into the UI of a device that is desired to be controlled.

US 6, 704,798 B1 relates to an explicit server control of transcoding representation conversion at a proxy or client location, wherein methods are disclosed for converting a response from a first representation to a second representation in a network environment.

Accordingly, there is a need for systems and methods for remote cross-platform instructions that address these and other problems found in existing technologies.

### SUMMARY

Systems and methods are therefore presented for providing remote cross-platform instructions.

According to some embodiments, systems and methods may comprise a first user device to define a first set of instructions directed to achieving a result, a server in communication with the first user device, wherein the server is to receive an indication of the first set of instructions from the first user device and convert the first set of instructions to a second set of instructions directed to achieving the result, and a second user device in communication with at least one of the first user device or the server, wherein the second user device is to execute the second set of instructions to achieve the result.

With these and other advantages and features of embodiments that will become hereinafter apparent, embodiments may be more clearly understood by reference to the following detailed description, the appended claims and the drawings attached herein.

### BRIEF DESCRIPTION OF THE DRAWINGS

FIG. 1 is a block diagram of a system according to some embodiments;
FIG. 2A is a block diagram of a system according to some embodiments;
FIG. 2B is a block diagram of a system according to some embodiments;
FIG. 2C is a block diagram of a system according to some embodiments;
FIG. 3 is a flowchart of a method according to some embodiments;
FIG. 4A is a block diagram of a system according to some embodiments;
FIG. 4B is a block diagram of a system according to some embodiments; and
FIG. 5 is a block diagram of a system according to some embodiments.

### DETAILED DESCRIPTION

Some embodiments described herein are associated with a "user device" or a "network device". As used herein, the terms "user device" and "network device" may be used interchangeably and may generally refer to any device that can communicate via a network. Examples of user or network devices include a PC, a workstation, a server, a printer, a scanner, a facsimile machine, a copier, a PDA, a storage device (e.g., a disk drive), a hub, a router, a switch, and a modem or a wireless phone. User and network devices may comprise one or more communication or network components, such as a Static Random Access Memory (SRAM) device or module, a network processor, and a network communication path, connection, port, or cable.

In addition, some embodiments are associated with a "network" or a "communication network". As used herein, the terms "network" and "communication network" may be associated with the transmission of messages, packets, signals, and/or other forms of information between and/or within one or more network devices. By way of example, a network may be configured to operate in accordance with the Fast Ethernet LAN transmission standard 802.3-2002® published by the Institute of Electrical and Electronics Engineers (IEEE). In some embodiments, a network may include one or more wired and/or wireless networks operated in accordance with any communication standard that is or becomes known or practicable.

As used herein, the terms "information" and "data" may be used interchangeably and may refer to any data, text, voice, video, image, message, bit, packet, pulse, tone, waveform, and/or other type or configuration of signal and/or information. Information may be or include information packets transmitted, for example, in accordance with the Internet Protocol Version 6 (IPv6) standard as defined by "Internet Protocol Version 6 (IPv6) Specification" RFC 1883, published by the Internet Engineering Task Force (IETF), Network Working Group, S. Deering et al. (December 1995). Information may, according to some embodiments, be compressed, encrypted, and/or otherwise packaged or manipulated in accordance with any method that is or becomes known or practicable.

In addition, some embodiments described herein are associated with an "indication". As used herein, the term "indication" may be used to refer to any indicia and/or other information indicative of or associated with a subject, item, entity, and/or other object and/or idea. As used herein, the phrases "information indicative of" and "indicia" may be used to refer to any information that represents, describes, and/or is otherwise associated with a related entity, subject, or object. Indicia of information may include, for example, a code, a reference, a link, a signal, an identifier, and/or any combination thereof and/or any other informative representation associated with the information. In some embodiments, indicia of information (or indicative of the information) may be or include the information itself and/or any portion or component of the information. In some embodiments, an indication may include a request, a solicitation, a broadcast, and/or any other form of information gathering and/or dissemination.

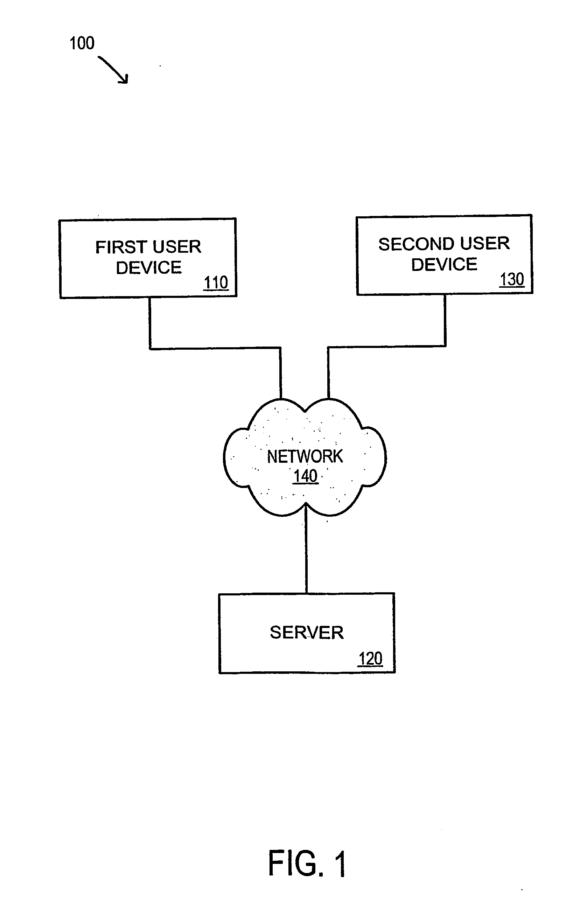

Referring first to FIG. 1, a block diagram of a system 100 according to some embodiments is shown. The various systems described herein are depicted for use in explanation, but not limitation, of described embodiments. Different types, layouts, quantities, and configurations of any of the systems described herein may be used without deviating from the scope of some embodiments. Fewer or more components than are shown in relation to the systems described herein may be utilized without deviating from some embodiments.

The system 100 may comprise, for example, a first user device 110, a server 120, and/or a second user device 130, any or all of which may be in communication via a network 140. In some embodiments, the user devices 110, 130 may be or include any type or configuration of network and/or electronic devices that are or become known. The user devices 110, 130 may, for example, be mobile electronic devices such as wireless or cellular telephones and/or Personal Digital Assistant (PDA) devices. According to some embodiments, the user devices 110, 130 may be associated with various users (not shown).

In some embodiments, it may be desirable to operate and/or configure the first user device 110 in a certain manner. The user of the first user device 110 may, for example, desire to achieve a certain result utilizing the first user device 110. In the case that the first user device 110 is a cellular telephone, for example, the user may desire to perform any number of UI and/or configuration functions such as setting and/or selecting a ring tone, changing language settings, and/or associating an image with a contact entry. To achieve the desired result, the user may be required to perform a variety of steps, such as sequentially pushing buttons to navigate through the UI of the first user device 110 to achieve the result.

In some embodiments, the user may not, however, know how to achieve the result. The user may have accidentally changed the language settings of the first user device 110 to a language not understood by the user, for example. Typically, to resolve such an issue, the user would be required to contact a customer service technician to walk the user through the UI steps required to change the language settings back to the desired language. According to some embodiments, however, the user may simply communicate with the server 120 to resolve the issue.

For example, the first user device 110 may provide the server 120 with an indication of the problem, desired result, and/or other information. The server 120 may, according to some embodiments, create a set of instructions tailored to achieving the desired result (and/or solving an indicated problem). In some embodiments, the instructions may also or alternatively be specifically tailored to the first user device 110. For example, the server 120 may be provided with information associated with the type and/or configuration of the first user device 110. The first user device 110 may provide the information, the server 120 may store the information (e.g., for all devices registered with and/or in communication with the server 120), and/or the server 120 may be provided with the information from any other practicable source.

In some embodiments, the server 120 may send the instructions to the first user device 110. The instructions may, for example, be or include a program and/or application to be executed by the first user device 110. According to some embodiments, the server 120 and/or the instructions may cause the first user device 110 to automatically execute the instructions to achieve the desired result. The server 120 may, for example, be a customer service device via which a customer service representative may send a tailored application to execute on the first user device 110 to fix any problems and/or achieve any desired results (e.g., restoring desired language settings). In such a manner, for example, the achievement of the result on the first user device 110 may be more easily and/or quickly realized than is possible in typical systems.

According to some embodiments, the result may also or alternatively be achieved via the second user device 130. For example, the user of the first user device 110 may contact the user of the second user device 130 and provide information indicative of the problem to be remedied and/or the result desired to be achieved on the first user device 110. The user of the second user device 130 may, for example, know how to achieve the result on the second user device 130. In some embodiments, the user may create a set of instructions (*e.g.*, record a macro) tailored to achieve the result on the second user device 130. The instructions may be sent to the first user device 110 to be executed to achieve the desired result. Because the user devices 110, 130 may operate different UI programs and/or may be otherwise differently configured, the set of instructions may also or alternatively be converted to be tailored to achieve the result on the first user device 110.

In some embodiments, the server 120 may also participate in the communication between the user devices 110, 130. The server 120 may, for example, receive the instructions indicating the desired result from the second user device 130. According to some embodiments, the server 120 may translate and/or convert the instructions to be configured and/or tailored to achieve the result on the first user device 110. The server 120 may then, for example, send the converted instructions to the first user device 110 to achieve the desired result.

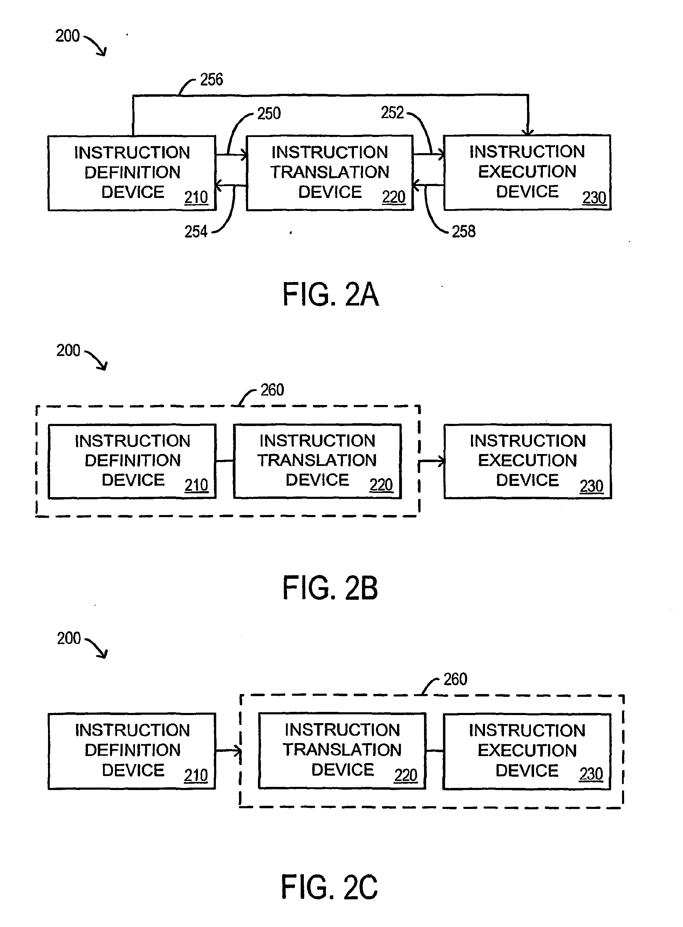

Referring now to FIG. 2A, FIG. 2B, and FIG. 2C, block diagrams of systems 200 according to some embodiments are shown. The systems 200 may comprise, for example, an instruction definition device 210, an instruction translation device 220, and/or an instruction execution device 230. In some embodiments, the components 210, 220 of the system 200 may be similar in configuration and/or functionality to the similarly-named and/or numbered components described in conjunction with FIG. 1. In some embodiments, fewer or more components than are shown in FIG. 2A, FIG. 2B, and/or FIG. 2C may be included in the systems 200.

Referring in more detail to FIG. 2A specifically, the system 200 may, for example, comprise three separate devices 210, 220, 230 operable to remotely execute cross-platform instructions. According to some embodiments, the instruction definition device 210 may be or include any type or configuration of device that is operable to define one or more instructions, set of instructions, and/or information associated therewith. In some embodiments, the instruction definition device 210 may be a user device such as a cellular telephone and/or other mobile platform. The instruction definition device 210 may, for example, be utilized to create a set of instruction directed to achieving a particular result. The instructions, according to some embodiments, may be specifically directed to achieving the result on the instruction definition device 210 itself. In some embodiments, the instructions may be sent to the instruction translation device 220 *(e.g.,* via a communication path 250).

The instruction translation device 220 may be any type or configuration of device that is operable to translate the instructions defined by the instruction definition device 210. In some embodiments, the instruction translation device 220 may be or include a server. For example, the instruction translation device 220 may receive instructions from the instruction definition device 210 (e.g., via the communication path 250) and translate and/or convert the instructions into one or more formats and/or configurations. In some embodiments, the instruction translation device 220 may convert the instructions into a format and/or form operable to achieve the desired result on the instruction execution device 230. The instruction translation device 220 may then, for example, send the converted instructions to the instruction execution device 230 *(e.g.,* via the communication path 252). In some embodiments, the instruction execution device 230 may automatically execute the translated and/or converted instructions to achieve the desired result on the instruction execution device 230.

The instruction execution device 230 may be any type or configuration of device operable to execute one or more instructions, sets of instructions, and/or otherwise process information associated therewith. The instruction execution device 230 may, for example, be a cellular telephone and/or other portable electronic device. According to some embodiments, any or all of the devices 210, 220, 230 in the system 200 may be located remotely from one another. The instructions defined by the instruction definition device 210 may, for example, be remotely translated by the instruction translation device 220 and/or remotely executed by the instruction execution device 230.

In some embodiments, the instructions translated by the instruction translation device 220 may be provided to the instruction definition device 210 (e.g., the source of the original instructions). In the case that it is not desirable for the instruction translation device 220 to be in communication with (e.g., know the address and/or identity of) the instruction execution device 230, for example, the instruction translation device 220 may only be privy to configuration information associated with the instruction execution device 230, may utilize that information to translate the instructions, and/or may send the translated instructions back to the instruction definition device 210 *(e.g.,* via the communication path 254).

In the case that the instruction definition device 210 creates and/or defines the instructions (and/or the desired result associated therewith) and also receives the translated instructions back from the instruction translation device 220, the instruction definition device 210 may then, for example, send the translated instruction directly to the instruction execution device 230 (e.g., via the communication path 256). In some embodiments, the instruction execution device 230 may then automatically execute the translated instructions to achieve the desired result *(e.g.,* the desired result defined by the instruction definition device 210).

According to some embodiments, the instruction execution device 230 may also or alternatively receive instructions directly from the instruction definition device 210 *(e.g.,* via the communication path 256). The instruction execution device 230 may then, for example, send the instructions to the instruction translation device 220 (e.g., via the communication path 258) to be translated and sent back to the instruction execution device 230 *(e.g.,* via the communication path 252) for execution. In other words, instruction translation may be initiated by either (or both) of the instruction definition device 210 and the instruction execution device 230.

The various communication paths 250, 252, 254, 256, 258 described herein are used solely to provide illustrative examples of how information may be communicated between the various devices 210, 220, 230 of the system 200. In some embodiments, fewer or more communication paths 250, 252, 254, 256, 258 than are shown in FIG. 2A may be included in the system 200. According to some embodiments, any of the communication paths 250, 252, 254, 256, 258 shown may be or include the same physical cable, path, port, and/or other structure. In some embodiments, the communication paths 250, 252, 254, 256, 258 may refer to and/or identify communication sessions and/or other instances of communication in accordance with the embodiments described herein.

Turning to FIG. 2B and FIG. 2C, examples of embodiments of the system 200 are shown. In FIG. 2B and/or FIG. 2C, for example, the systems 200 may comprise the three devices 210, 220, 230 as described in conjunction with FIG. 2A. The devices 210, 220, 230 may communicate in any manner, direction, form, or style that is or becomes known or practicable. In some embodiments, the devices 210, 220, 230 may communicate to remotely execute cross-platform instructions (*e.g.*, defined by the instruction definition device 210 and/or executed by the instruction execution device 230). According to some embodiments, only one of the three devices 210, 220, 230 may be remote from the other devices 210, 220, 230.

As shown in FIG. 2B, for example, the instruction definition device 210 and the instruction translation device 220 may be related via an association 260. The association 260 may, according to some embodiments, comprise an actual, implied, logical, and/or physical association. For example, the association 260 may be defined by the two devices 210, 220 being located within proximity to each other, being operated and/or owned by the same entity, being components of a common device and/or system, and/or being otherwise related. In some embodiments, the association 260 may indicate that the two devices 210, 220 are incorporated within the same common device (such as a single cellular telephone).

For example, the singular device defined by the association 260 may define the instructions and/or desired result and may also translate the instructions into a format (and/or create the instructions in a format) tailored for the instruction execution device 230. The device defined by the association 260 may then, according to some embodiments, forward the instruction to the instruction execution device 230 to be executed to achieve the desired result. In other words, the translation of the instructions (and/or the creation of the instructions in a particular format) may occur on and/or at the same device that also defines the instructions and/or the desired result to be achieved. In some embodiments, the singular device defined by the association 260 may be located remotely for the instruction execution device 230. In such a manner, for example, instructions may be generated and/or translated and remotely executed on the instruction execution device 230.

As shown in FIG. 2C, the association 260 may exist between the instruction translation device 220 and the instruction execution device 230. In other words, the translation of the instructions may occur on and/or at the same device that executes the instructions (e.g., the device on which the intended result is desired to be achieved). For example, the instruction definition device 210 may be used to define a first set of instructions directed to achieving a result (*e.g.*, on the instruction execution device 210). The instructions may then, according to some embodiments, be sent to the device defined by the association 260. The device defined by the association 260 may then, for example, translate the instructions into a form, format, type, and/or style appropriate for execution on the instruction execution device 230 (and/or on the device defined by the association 260). The translated instructions may then, in some embodiments, be executed to achieve the desired result (*e.g.*, on the device defined by the association 260 and/or on the instruction execution device 230).

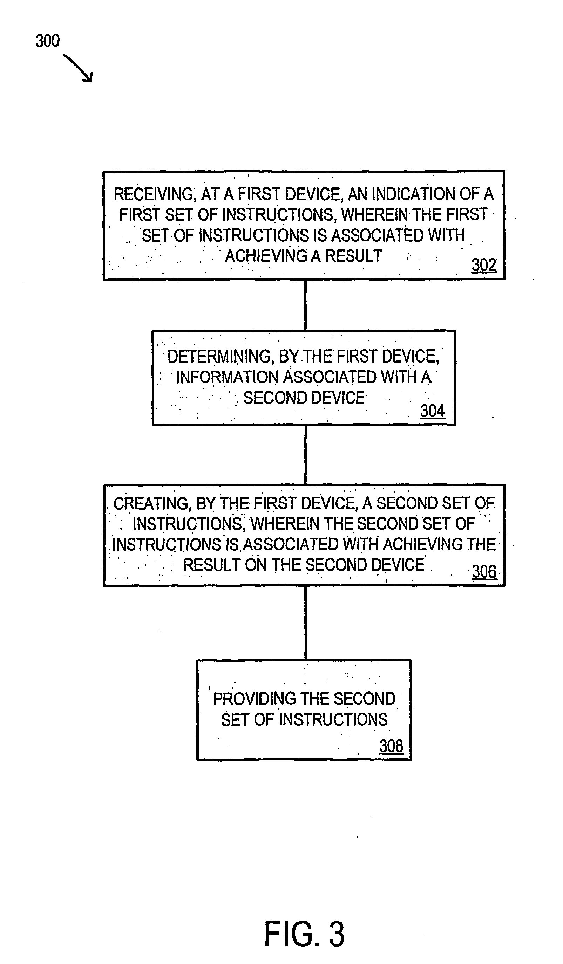

Turning now to FIG. 3, a method 300 according to some embodiments is shown. In some embodiments, the method 300 may be conducted by and/or by utilizing the systems 100, 200 and/or may be otherwise associated with the systems 100, 200 and/or any of the system components described in conjunction with any of FIG. 1, FIG. 2A, FIG. 2B, and/or FIG. 2C. The method 300 may, for example, be performed by and/or may be otherwise associated with a server 120 and/or an instruction translation device 220 as described herein. The flow diagrams described herein do not necessarily imply a fixed order to the actions, and embodiments may be performed in any order that is practicable. Note that any of the methods described herein may be performed by hardware, software (including microcode), firmware, manual means, or any combination thereof. For example, a storage medium may store thereon instructions that when executed by a machine result in performance according to any of the embodiments described herein.

According to some embodiments, the method 300 may begin at 302 by receiving, at a first device, an indication of a first set of instructions, wherein the first set of instructions is associated with achieving a result. The first device may, for example, be a server such as a remote server operable to perform embodiments as described herein. In some embodiments, the indication of the first set of instructions may comprise a first set of instructions, an indication of a first set of instructions, and/or an indication of a desired result. For example, the indication may define a result that is desired to be achieved, and thereby indicate the first set of instructions (*e.g.*, steps operable to achieve the desired result).

In some embodiments, the indication may be received via a component of the first device and/or via another device. The indication may be sent and/or generated, for example, by another device (*e.g.*, a cellular telephone), by an input device associated with the first device (*e.g.*, a mouse, keyboard, and/or touch screen), and/or by an internal component of the first device *(e.g.,* a memory device and/or a processor). In some embodiments, the result may be a generic and/or general result. The result may also or alternatively be a result desired to be achieved on and/or by a particular device.

The method 300 may continue, according to some embodiments, by determining, by the first device, information associated with a second device, at 304. In the case that the desired result, the first set of instructions, and/or the indication thereof is associated with a second device, for example, the first device may receive, retrieve, lookup, acquire, and/or otherwise determine information associated with the second device. In some embodiments, the information may be associated with a type, configuration, and/or other parameter related to the second device. The information may comprise, for example, information indicating a device type, various settings values, a UI type, and operating system type, an application type, and/or other factors associated with the second device. According to some embodiments, the information may be received from the same device that provided the indication at 302. In some embodiments, the first device may utilize the indication and/or a portion thereof to access a database and/or other data store that contains information associated with the second device (such as information identifying the second device). The information may also or alternatively be received from the second device itself.

According to some embodiments, the method 300 may continue at 306 by creating, by the first device, a second set of instructions, wherein the second set of instructions is associated with achieving the result on the second device. For example, the first set of instructions (and/or the indication thereof) may be determined not to be operable to achieve the desired result on the second device. The second set of instructions may then, for example, be tailored to achieve the result on the second device. In some embodiments, the first device may create the second set of instructions based at least in part on the information determined (*e*.*g.*, at 304) to be associated with the second device. The second set of instructions may, for example, be customized to achieve the result on the second device. According to some embodiments, the second set of instructions may be formatted, configured, and/or otherwise created or designed to be compatible with a UI, application, setting, and/or other feature associated with the second device.

The method 300 may continue, according to some embodiments, by providing the second set of instructions at 308. In some embodiments, the second set of instructions may be provided to the second device (*e.g.*, the device upon which the second set of instructions are intended to be executed to achieve the desired result). According to some embodiments, the second set of instructions may be provided to another device, such as the device and/or component via which the indication was received at 302. In some embodiments, the second set of instructions may be provided in a manner and/or format that causes the second set of instructions to be executed upon arrival at another device. In such a manner, for example, the second set of instructions may be automatically executed to achieve the desired result.

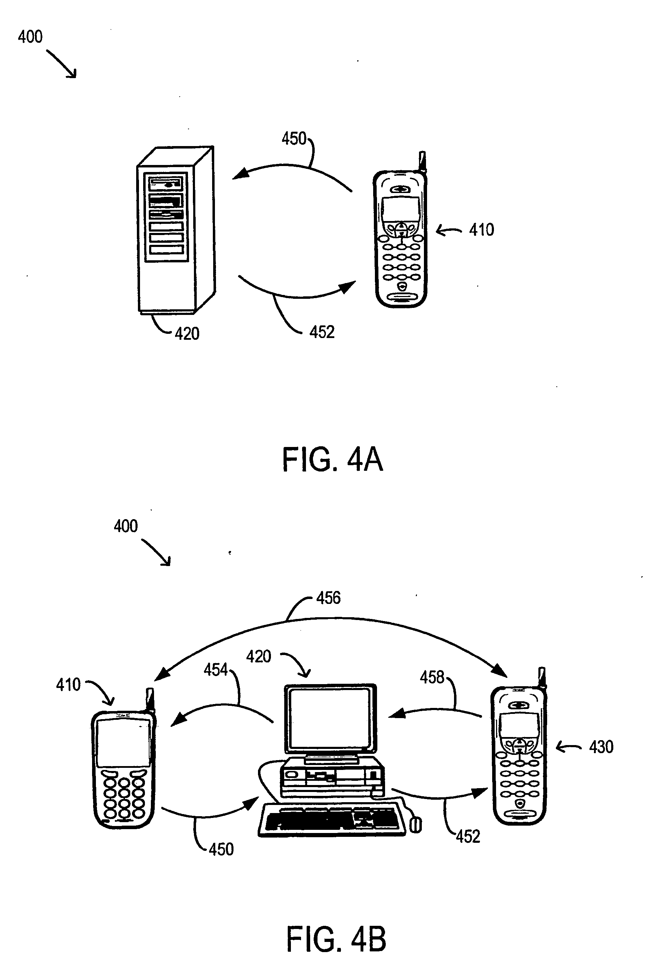

Turning now to FIG. 4A and FIG. 4B, block diagrams of an exemplary system 400 according to some embodiments are shown. The system 400 may, for example, be utilized to implement and/or perform the method 300 described herein and/or may be associated with the systems 100, 200 described in conjunction with any of FIG. 1, FIG. 2A, FIG. 2B, and/or FIG. 2C. In some embodiments, the components 410, 420, 430, 450, 452, 454, 456, 458 of the system 400 may be similar in configuration and/or functionality to the similarly-named and/or numbered components described in conjunction with any of FIG. 1, FIG. 2A, FIG. 2B, and/or FIG. 2C. In some embodiments, fewer or more components than are shown in FIG. 4A and/or FIG. 4B may be included in the system 400. According to some embodiments, different types, layouts, quantities, and configurations of systems may be used.

As shown in FIG. 4A, the system 400 may comprise a wireless telephone 410 and a server 420. According to some embodiments, the server 420 may be associated with conducting and/or implementing the method 300 and or any portions thereof described in conjunction with FIG. 3. The wireless telephone 410 may also or alternatively be associated with the method 300 *(e.g.,* by being the second device and/or the device that provides the indication to the first device). According to some embodiments, the wireless telephone 410 and the server 420 may be associated with and/or may conduct other methods and/or procedures instead of or in addition to the method 300.

For example, the wireless telephone 410 may be utilized by a user (not shown). The user may, for any number of reasons, desire to achieve a result on the wireless telephone 410. The user may, for example, have accidentally changed the language setting of the wireless telephone 410 to a language that is not understood by the user. The user may therefore desire to change the language setting back to the desired language, but may not know how (*e.g.*, particularly if the menu items in the UI of the wireless phone 410 are now in a different language). In some embodiments, the user may contact the server 420 (e.g., via the communication path 450). According to some embodiments, the server 420 may be associated with providing customer service to the user. The user may, for example, be able to place a call to a customer service Interactive Voice Response (IVR) server 420 and/or may be able to access a website hosted by a customer service web server 420.

According to some embodiments, the user may utilize the wireless telephone 410 to provide an indication of the problem (*e.g.,* wrong language setting), the desired result (*e.g.*, correct the language setting), and/or an instruction or set of instructions (*e.g*., change language to "English") to the server 420. The user may, for example, initiate a call with a customer service representative (not shown) associated with the server 420 and tell the representative the problem. The wireless telephone 410 may also or alternatively be utilized to provide the server 420 with other information associated with the wireless telephone 410. For example, the user and/or the wireless telephone 410 may provide information associated with settings, configurations, hardware and/or software versions or types, and/or other features related to the wireless telephone 410.

According to some embodiments, the server 420 may receive identification information from the wireless telephone 410. The server 420 may then, for example, lookup and/or retrieve configuration, model type, and/or other information associated with the wireless telephone 410 from a database and/or other data store (*e.g.*, a file and/or spreadsheet). In some embodiments, the sever 420 may utilize the information received from the wireless telephone 410 and/or the information determined to be associated with the wireless telephone 410 to determine how the desired result may be achieved on the wireless telephone 410.

For example, the server 420 may determine a set of instructions and/or steps that may be operable to achieve the result on the wireless telephone 410. In some embodiments, the server 420 may utilize information related to the wireless telephone 410 and information relating to the desired result to lookup the instructions (*e.g.*, predetermined steps or instructions for common problems). According to some embodiments, the server 420 may otherwise process the information to determine the instructions. The instructions may be tailored, for example, to be operable with the UI and/or operating system of the wireless telephone 410.

According to some embodiments, the server 420 may be operable to determine how to achieve desired results on any of a variety of different models and/or types of wireless telephone 410 that are capable of communicating with the server 420. In such a manner, for example, the server 420 may be capable of defining instructions in accordance with a user's desires regardless of the type of wireless telephone 410 that the user owns and/or utilizes. In the case that the user of the wireless telephone 410 desires language settings to be restored, for example, the server 420 may determine what UI steps and/or other instructions may be required to restore the settings on the particular wireless telephone 410.

Some problems and/or results may be handled in a variety of ways and/or utilizing a variety of instructions. According to some embodiments, the server 420 may determine one or more instructions operable to achieve the result. In some embodiments, the server 420 may select one or several determined instructions to be utilized to achieve the result *(e.g.,* the set of instructions with the least amount of steps and/or processing overhead).

In some embodiments, the instructions determined by the server 420 may be stored and/or coded for use by the wireless telephone 410. Once the instructions are defined, for example, the instructions may be compiled into an application and/or executable filed. In some embodiments, the application may be or include a Java™, BREW, and/or other application capable of being executed by the particular model, type, and/or configuration of wireless telephone 410. The application may then, for example, be sent and/or provided to the wireless telephone 410 *(e.g.,* via the communication path 452). According to some embodiments, the instructions and/or the application may be automatically executed by the wireless telephone 410 to achieve the desired result.

Upon receiving the customized application, for example, the wireless telephone may automatically restore the user's language setting as desired. According to some embodiments, the user may interact with the server 420 (e.g., a web server) to define, create, and/or modify the instructions or application as desired. Upon contacting the server 420 and identifying the problem, for example, the server 420 may execute a solution "wizard" application to step the user through the process of creating the application to fix the user's problem. In some embodiments, the user may also or alternatively utilize the wizard and/or interact with the server 420 to solve a problem and/or achieve a result on another device such as another user's telephone.

As shown in FIG. 4B, for example, the system 400 may comprise a first wireless device 410, a PC 420, and a second wireless device 430. The first wireless device 410 may, for example, be a PDA and/or a combination PDA and cellular telephone. In some embodiments, the first wireless device 410 may be operated by a first user (not shown). The second wireless device 430 may, according to some embodiments, be or include a wireless and/or cellular telephone utilized by a second user (not shown). In one exemplary embodiment, the first user may utilize the first wireless device 410 to assist the second user in accomplishing a result on the second wireless device 430. In the case that the second user accidentally changed the language setting of the second wireless device 430, for example, and does not know how to restore the setting, the first user may assist.

For example, the first user may create a first set of instructions to achieve the desired result and/or "fix" the problem on the first wireless device 410. In the case that the language setting is desired to be restored, for example, the first user may utilize the first wireless device 410 to record a macro that stores the steps the first user takes in the UI of the first wireless device 410 to change the language setting of the first wireless device 410. According to some embodiments, the first set of instructions and/or the macro may be sent to the PC 420 (*e.g.,* via the communication path 450).

The PC 420 may, for example, be a computer owned and/or operated by the first user and/or another entity. In some embodiments, the PC 420 may be a server such as the server 420 of FIG. 4A. According to some embodiments, the PC 420 may receive the first set of instructions and/or the macro from the first wireless device 410. The PC 420 may then, for example, determine information associated with the second wireless device 430. The first user may utilize the first wireless device 410 to indicate to the PC 420 that the instructions are desired to be executed on the second wireless device 430, for example. In some embodiments, the first wireless device 410 may provide the PC 420 with information associated with the second wireless device 430. The PC 420 may be provided with identification, configuration, model number, type, UI type and/or version, and/or other information associated with the second wireless device 430. In some embodiments, the PC 420 may receive the information from the second wireless device 430 and/or may lookup the information.

According to some embodiments, the PC 420 may utilize the information associated with the second wireless device 430 to translate and/or convert the first set of instructions and/or the macro. Based at least in part on the type and/or configuration of the second wireless device 430, for example, the PC 420 may convert at least one component of the first set of instructions (and/or macro) to create a second set of instructions operable to function on the second wireless device 430. In some embodiments, the PC 420 may convert a key stroke, a navigational step *(e.g.,* a UI navigational step), a file system path, and/or other component of the first set of instructions into a different form, type, and/or configuration of key stroke, navigational step, file system path, and/or other component. The PC 420 may, for example, convert a sequence of UI navigational steps configured to operate on the first wireless device 410 into a different sequence of UI navigational steps operable to obtain the same result through the UI of the second wireless device 430.

According to some embodiments, the PC 420 may package the second set of instructions and/or the converted or translated instructions into a module, macro, application, executable file, and/or other file. The PC 420 may then, for example, send and/or provide the application to the second wireless device 430 *(e.g.,* via the communication path 452) for execution. In some embodiments, the second wireless device 430 may automatically execute the application and/or second set of instructions to achieve the desired result. The second set of instructions may, for example, be automatically executed to restore the second user's desired language setting. In such a manner, for example, the first user may remotely (e.g., with respect to the second wireless device 430 and/or the PC 420) record a macro and/or otherwise define instructions that may be translated and executed to achieve a desired result on the second wireless device 430.

In some embodiments, the PC 420 may provide the translated instructions back to the first wireless device 410 (e.g., via the communication path 454). In the case that is desirable for the second wireless device 430 to remain anonymous to the PC 420, for example, the first wireless device 410 may interface with the PC 420 to have the instructions translated. The first wireless device 410 may then, for example, provide the resulting application (and/or translated second set of instructions) directly to the second wireless device 430 (*e.g.*, via the communication path 456).

According to some embodiments, the communication path 456 may otherwise be utilized by the wireless devices 410, 430. For example, the second wireless device 430 may send the first wireless device 410 an indication of the desired result and/or problem to be solved via the communication path 456. The second user may call the first user, for example, and ask how language settings are changed. The first user may not know how to change language settings on the second wireless device 430, but may know how to do so on the first wireless device 410. In some embodiments, the first user may record a macro associated with changing the language settings on the first wireless device 410, and/or may send the macro to the second user via the communication path 456.

The second user may then, for example, utilize the second wireless device 430 to send the macro to the PC 420 for translation *(e.g.,* via the communication path 458). In some embodiments, the second wireless device 430 may first check the macro to determine if it is compatible with the second wireless device 430. Incompatible macros and/or other instructions may, for example, be sent to the PC 420 for translation. The PC 420 may, according to some embodiments, translate the macro and/or instructions into a form compatible with and/or operable to achieve the desired result on the second wireless device 430. The PC 420 may then, for example, send the translated instructions and/or macro back to the second wireless device 430 via the communication path 452.

According to some embodiments, the PC and/or server 420 may be used to translate, convert, and/or create any variety of instructions. As another exemplary embodiment, the first user may desire to purchase a ring tone and/or other file (such as a bitmap image) for the second user to utilize on the second wireless device 430. The first user may utilize the first wireless device 410, for example, to interface with the PC 420, which may be associated with a provider of ring tones and/or other files. The PC 420 may, in some embodiments, be a web server associated with selling ring tones to consumers.

According to some embodiments, the first user may purchase a desired ring tone from the PC 420 and may indicate that the ring tone is desired to be activated on the second user device 430. The PC 420 may then, for example, formulate instructions tailored to set the ring tone as active on the second wireless device 430. In some embodiments, the instructions (*e.g.*, a macro, executable file, and/or application) may be sent to the second wireless device 430 along with, attached to, imbedded with, and/or otherwise associated with the purchased ring tone. In such a manner, for example, the first user may purchase a file for the second user and the file may automatically be utilized by the second wireless device 430.

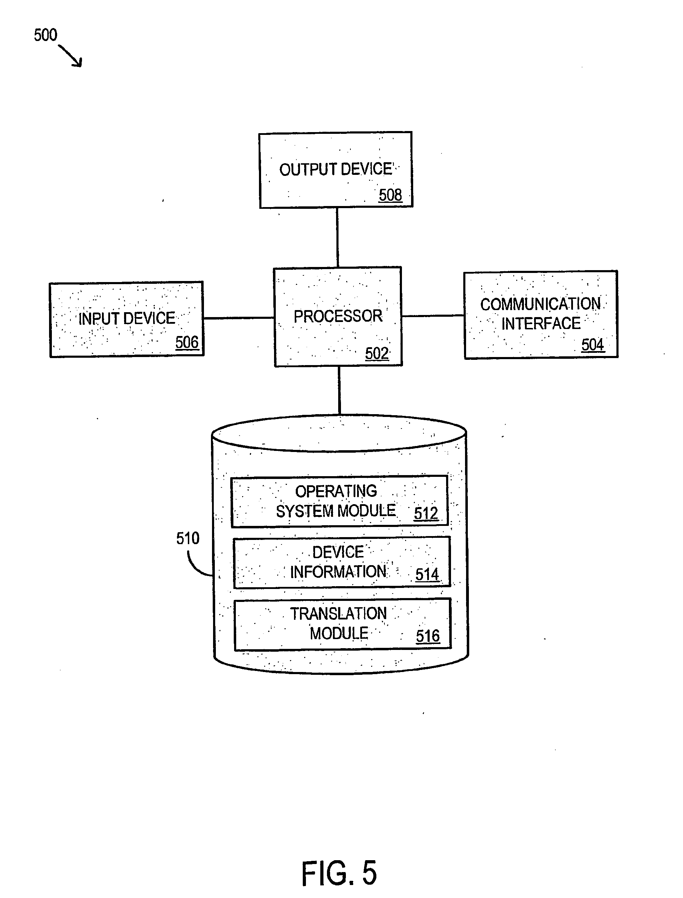

Referring now to FIG. 5, a block diagram of a system 500 according to some embodiments is shown. The system 500 may, for example, be utilized to implement and/or perform the method 300 described herein and/or may be associated with the systems 100,200,400 described in conjunction with any of FIG. 1, FIG. 2A, FIG. 2B, FIG. 2C, FIG. 4A, and/or FIG. 4B. In some embodiments, fewer or more components than are shown in FIG. 5 may be included in the system 500. According to some embodiments, different types, layouts, quantities, and configurations of systems may be used.

In some embodiments, the system 500 may be or include a computer such as a PC, a server, a web server, and/or an IVR server. According to some embodiments, the system 500 may be or include a server such as the server 120, 420 described herein. In some embodiments, the system 500 may include one or more processors 502, which may be any type or configuration of processor, microprocessor, and/or micro-engine that is or becomes known or available. In some embodiments, the system 500 may also or alternatively include a communication interface 504, an input device.506, an output device 508, and/or a memory device 510, all and/or any of which may be in communication with the processor 502. The memory device 510 may store, for example, an operating system module 512, device information 514, and/or a translation module 516.

The communication interface 504, the input device 506, and/or the output device 508 may be or include any types and/or configurations of devices that are or become known or available. According to some embodiments, the input device 506 may include a keypad, one or more buttons, and/or one or more softkeys and/or variable function input devices. The communication interface 504 may, according to some embodiments, allow the system 500 to communicate with various user devices such as wireless and/or cellular telephones.

The memory device 510 may be or include, according to some embodiments, one or more magnetic storage devices, such as hard disks, one or more optical storage devices, and/or solid state storage. The memory device 510 may store, for example, the operating system module 512, the device information 514, and/or the translation module 516. The modules 512, 516 may be any type of applications, modules, programs, and/or devices that are capable of facilitating network routing, processing, and/or management. Either or both of the operating system module 512 and/or the translation module 516 may, for example, include instructions that cause the processor 502 to operate the system 500 in accordance with embodiments as described herein.

For example, the operating system module 512 may cause the system 500 to monitor for the occurrence of events, may provide instructions for interfacing with a user via the input device 506 and/or the output device 508, and/or may manage and/or conduct cellular telephone and/or web browsing sessions via the communication interface 504. The operating system module 512 may also or alternatively provide various applications and/or programs that may be utilized to provide interactive functionality to the system 500.

The translation module 516 may, according to some embodiments, be or include a module that allows and/or facilitates the system 500 to create, translate, and/or convert instructions to be remotely executed by a user device. The translation module 516 may, for example, utilize a received indication of a desired result to create and/or modify a set of instructions tailored to achieving the result on a specific device. In some embodiments, the translation module 516 may utilize the device information 514 to tailor the instructions to a particular device. According to some embodiments, the system 500 may also or alternatively be associated with a device on which the instructions are to be executed and/or a device via which the instructions and/or desired result are defined. The translation module 516 may, for example, reside on a user's cellular telephone to permit the cellular telephone to create, define, translate, and/or execute various instructions.

## Claims

1. A system (400), comprising
a first wireless phone (410) to define a first sequence of UI navigational steps directed to achieving a result;
a server (420) in communication with the first wireless phone (410), wherein the server (420) is to receive the first sequence of UI navigational steps from the first wireless phone (410) and convert the first sequence of UI navigational steps, by means of a lookup, to a second sequence of UI navigational steps directed to achieving the result; and
a second wireless phone (430) in communication with at least one of the first wireless phone (410) or the server (420), wherein the second wireless phone (430) is provided with the second sequence of UI navigational steps and wherein the second wireless phone (430) is to execute the second sequence of UI navigational steps to achieve the result.

2. A method for providing cross platform instructions, comprising the steps of
defining a first sequence of UI navigational steps directed to achieving a result at a first wireless phone (410);
receiving, at a server (420) in communication with the first wireless phone (410), the first sequence of UI navigational steps from the first wireless phone (410) and converting the first sequence of UI navigational steps by means of a lookup to a second sequence of UI navigational steps directed to achieving the result;
providing the second sequence of UI navigational steps to the second wireless phone (430); and
executing, at the second wireless phone (430), the second instructions sequence of UI navigational steps to achieve the result, wherein the second wireless phone (430) is in communication with at least one of the first wireless phone (410) or the server (420).

## Patentansprüche

1. System (400), welches umfasst:
ein erstes Funktelefon (410), um eine erste Folge von UI-Navigationsschritten zu definieren, die darauf gerichtet sind, ein Ergebnis zu erzielen;
einen Server (420), der mit dem ersten Funktelefon (410) in Kommunikation steht, wobei der Server (420) die erste Folge von UI-Navigationsschritten von dem ersten Funktelefon (410) empfangen und die erste Folge von UI-Navigationsschritten mittels eines Nachschlagevorgangs in eine zweite Folge von UI-Navigationsschritten umwandeln soll, die darauf gerichtet sind, das Ergebnis zu erzielen; und
ein zweites Funktelefon (430), das mit dem ersten Funktelefon (410) und/oder dem Server (420) in Kommunikation steht, wobei dem zweiten Funktelefon (430) die zweite Folge von UI-Navigationsschritten übermittelt wird, und wobei das zweite Funktelefon (430) die zweite Folge von UI-Navigationsschritten ausführen soll, um das Ergebnis zu erzielen.

2. Verfahren zum Bereitstellen von plattformübergreifenden Befehlen, welches die folgenden Schritte umfasst:
Definieren einer ersten Folge von UI-Navigationsschritten, die darauf gerichtet sind, ein Ergebnis zu erzielen, an einem ersten Funktelefon (410);
Empfangen, an einem Server (420), der mit dem ersten Funktelefon (410) in Kommunikation steht, der ersten Folge von UI-Navigationsschritten von dem ersten Funktelefon (410) und Umwandeln der ersten Folge von UI-Navigationsschritten mittels eines Nachschlagevorgangs in eine zweite Folge von UI-Navigationsschritten umwandeln soll, die darauf gerichtet sind, das Ergebnis zu erzielen;
Übermitteln der zweiten Folge von UI-Navigationsschritten zu dem zweiten Funktelefon (430); und
Ausführen, an dem zweiten Funktelefon (430), der zweiten Folge von UI-Navigationsschritten, um das Ergebnis zu erzielen, wobei das zweite Funktelefon (430) mit dem ersten Funktelefon (410) und/oder dem Server (420) in Kommunikation steht.

## Revendications

1. Un système (400), comprenant
un premier téléphone sans fil (410) destiné à définir une première séquence d'étapes de navigation d'interface utilisateur destinée à obtenir un résultat,
un serveur (420) en communication avec le premier téléphone sans fil (410), le serveur (420) étant destiné à recevoir la première séquence d'étapes de navigation d'interface utilisateur à partir du premier téléphone sans fil (410) et à convertir la première séquence d'étapes de navigation d'interface utilisateur, au moyen d'une consultation, en une deuxième séquence d'étapes de navigation d'interface utilisateur destinée à obtenir le résultat, et
un deuxième téléphone sans fil (430) en communication avec au moins un élément parmi le premier téléphone sans fil (410) ou le serveur (420), le deuxième téléphone sans fil (430) étant muni de la deuxième séquence d'étapes de navigation d'interface utilisateur et le deuxième téléphone sans fil (430) étant destiné à exécuter la deuxième séquence d'étapes de navigation d'interface utilisateur de façon à obtenir le résultat.

2. Un procédé de fourniture d'instructions inter-plateformes, comprenant les étapes suivantes :
la définition d'une première séquence d'étapes de navigation d'interface utilisateur destinée à obtenir un résultat au niveau d'un premier téléphone sans fil (410),
la réception, au niveau d'un serveur (420) en communication avec le premier téléphone sans fil (410), de la première séquence d'étapes de navigation d'interface utilisateur à partir du premier téléphone sans fil (410) et la conversion de la première séquence d'étapes de navigation d'interface utilisateur au moyen d'une consultation en une deuxième séquence d'étapes de navigation d'interface utilisateur destinée à obtenir le résultat,
la fourniture de la deuxième séquence d'étapes de navigation d'interface utilisateur au deuxième téléphone sans fil (430), et
l'exécution, au niveau du deuxième téléphone sans fil (430), de la deuxième séquence d'étapes de navigation d'interface utilisateur de façon à obtenir le résultat, le deuxième téléphone sans fil (430) étant en communication avec au moins un élément parmi le premier téléphone sans fil (410) ou le serveur (420).
